# EUROPÄISCHE PATENTANMELDUNG

(11) **EP 1 667 071 A1**
(43) Veröffentlichungstag der Anmeldung: **07.06.2006**
(21) Anmeldenummer: 05026300.3
(22) Anmeldetag: 02.12.2005
(51) Int. Cl.: G07B 15/02, G06Q 20/00, G07F 7/08

(54) **Verfahren zur automatischen Ermittlung eines Fahrpreises für die Benutzung kostenpflichtiger Transportmittel zur Personenbeförderung**

(30) Priorität: 02.12.2004 EP 04028569; 02.12.2004 DE 102004058273; 16.12.2004 DE 102004061180
(71) Anmelder: mcity GmbH, 41239 Mönchengladbach (DE)
(72) Erfinder: Stoffelsma, Bouke, 41239 Mönchengladbach (DE); Feiter, Manfred, 41238 Mönchengladbach (DE)
(74) Vertreter: Stenger, Watzke & Ring

(57) **Zusammenfassung**

Verfahren zur automatischen Ermittlung eines Fahrpreises für die Benutzung kostenpflichtiger Transportmittel zur Personenbeförderung, bei dem einem Nutzerendgerät ein Guthaben in einer in einem ersten Währungsgebiet gültigen Währung zugeordnet wird, das bei einer Benutzung eines Transportmittels zur automatischen Abrechnung des Fahrpreises dient, automatisch ein Umrechnungsfaktor zum Umrechnen der ersten Währung in eine in einem zweiten Währungsgebiet gültigen zweite Wahrung festgelegt wird, sobald das Nutzerendgerät in einem zweiten Währungsgebiet benutzt wird, und Fahrpreise automatisch in der zweiten Währung ermittelt, unter Verwendung des festgelegten Umrechnungsfaktors in die erste Währung umgerechnet und dem Guthaben in der ersten Währung abgezogen werden, solange das Nutzerendgerät nicht in einem anderen Währungsgebiet benutzt wird.

## Beschreibung

Die vorliegende Erfindung bezieht sich auf ein Verfahren zur automatischen Ermittlung eines Fahrpreises für die Benutzung kostenpflichtiger Transportmittel zur Personenbeförderung, bei dem einem Nutzerendgerät ein Guthaben zugeordnet wird, das bei einer Benutzung eines Transportmittels zur automatischen Abrechnung des Fahrpreises dient.

Derartige Verfahren sind im Stand der Technik grundsätzlich bekannt.

Der Rhein-Main-Verkehrsverbund betreibt beispielsweise in Hanau probeweise ein sogenanntes "Check-In/Check-Out"-System, bei dem der Fahrgast sich mit Hilfe einer Chipkarte beim Ein- und Aussteigen an einem Terminal im Fahrzeug identifiziert. Ein Hintergrundsystem errechnet, welche Strecken der Kunde tatsächlich gefahren ist und bucht die ermittelten Fahrpreise auf ein mit der Chipkarte verknüpftes Konto, über das dann die Abrechnung erfolgen kann.

Die PCT-Anmeldung NL 01/00215 beschreibt ein Verfahren, bei dem der Fahrgast ein Nutzerendgerät (z. B. ein Mobiltelefon oder ein Transponder) mit einer ihm zugeordneten Nummer benutzt, um automatisch identifiziert zu werden, wenn er sich in einem Transportmittel des öffentlichen Nahverkehrs aufhält. Das Transportmittel registriert, wo der Fahrgast das Transportmittel betritt, und wo er es wieder verläßt. In der Regel werden diese Daten an ein Hintergrundsystem übermittelt, das auf Basis dieser Daten den Fahrpreis für die zurückgelegte Strecke ermittelt. Ein solches System wird allgemein auch als "Be-In/Be-Out"-System bezeichnet.

Aus der DE 199 57 660 ist ein Verfahren zur Abrechnung des Fahrpreises bei der Benutzung öffentlicher Verkehrsmittel bekannt, bei dem ein vom Nutzer mitgeführter scheckkartenähnlicher Speicher mit einem Guthaben belegt ist. Während der Nutzung öffentlicher Verkehrsmittel werden von dem Verkehrsmittel Zählimpulse ausgesandt und bei jedem empfangenen Zählimpuls von dem auf der Speichereinheit abgespeicherten Guthaben ein Betrag abgebucht.

Ferner ist aus der Schweiz ein Pilotprojekt "easyride" bekannt, bei dem der Nutzer eine Transponder-Karte bei sich führt, die beim Benutzen eines Transportmittels eine Anmeldung im Transportmittel vornimmt und dies regelmäßig wiederholt. Basierend auf diesen Anmeldungen können die Fahrstrecke sowie der für diese Fahrstrecke zu entrichtende Fahrpreis ermittelt und abgerechnet werden.

Es ist eine **Aufgabe** der vorliegenden Erfindung, ein verbessertes Verfahren zur automatischen Ermittlung eines Fahrpreises für die Benutzung kostenpflichtiger Transportmittel zur Personenbeförderung bereitzustellen.

Diese Aufgabe wird gemäß der vorliegenden Erfindung durch ein Verfahren nach Anspruch 1 **gelöst**. Die abhängigen Ansprüche beziehen sich auf individuelle Ausgestaltungen des erfindungsgemäßen Verfahrens.

Bei dem erfindungsgemäßen Verfahren wird einem Nutzerendgerät wie bei den eingangs genannten bekannten Verfahren ein Guthaben zugeordnet, das bei einer Benutzung eines Transportmittels zur automatischen Abrechnung des Fahrpreises dient. Das Guthaben wird dem Nutzerendgerät dabei in einer in einem ersten Währungsgebiet gültigen Währung zugeordnet.

Sobald das Nutzerendgerät in einem zweiten Währungsgebiet genutzt wird, wird automatisch ein Umrechnungsfaktor zum Umrechnen der ersten Währung in eine in dem zweiten Währungsgebiet gültige zweite Währung festgelegt, wobei der Umrechnungsfaktor bevorzugt für einen vorbestimmten Zeitraum oder bis zum Eintritt eines vorbestimmten Ereignisses, wie beispielsweise bis zur Benutzung des Nutzerendgeräts in einem weiteren Währungsgebiet, konstant bleibt.

Fahrpreise für die Benutzung kostenpflichtiger Transportmittel werden dann grundsätzlich in der zweiten Währung ermittelt, unter Verwendung des festgelegten Umrechnungsfaktors in die erste Währung umgerechnet und dann dem Guthaben in der ersten Währung abgezogen, solange das Nutzerendgerät nicht in einem anderen Währungsgebiet benutzt wird. Das Guthaben bleibt also in der ersten Währung erhalten und wird nicht mittels des Umrechnungsfaktors vollständig in die zweite Währung überführt. Lediglich der Fahrpreis wird in der zweiten Währung berechnet, dann auf die erste Währung umgerechnet und dem in der ersten Währung geführten Guthaben abgezogen. Dies hat den Vorteil, daß keine Reduzierung des Gesamtguthabens allein aufgrund von Währungsschwankungen zu befürchten ist, wenn ein Nutzer von einem ersten Währungsgebiet in ein zweites und dann wieder zurückwechselt. Da der Umrechnungsfaktor für eine vorbestimmte Zeitdauer oder bis zum Eintritt eines vorbestimmten Ereignisses konstant bleibt, kann sich das dem Nutzerendgerät zugeordnete Guthaben während dieser Zeit auch nicht aufgrund von Währungsschwankungen verringern. Entsprechend kann beispielsweise der Fall ausgeschlossen werden, daß das Guthaben bei Fahrtantritt noch ausreichend ist, sich während der Fahrt jedoch derart reduziert, daß am Ende der geforderte Fahrpreis nicht von dem auf dem Nutzerendgerät gespeicherten Guthaben gedeckt ist.

Die vorliegende Erfindung schafft also ein Verfahren zur automatischen Ermittlung eines Fahrpreises für die Benutzung kostenpflichtiger Transportmittel zur Personenbeförderung, das währungsübergreifend einsetzbar ist, wobei sichergestellt ist, daß dem Nutzer aufgrund von Währungsschwankungen keine Nachteile entstehen. Entsprechend ist das dem Nutzerendgerät zugeordnete Guthaben für den Nutzer einschätzbar, da eine Änderung des Guthabens nur aufgrund einer Transportmittelnutzung erfolgen kann. Schließlich kann auch die Abrechnung einzelner Fahrten vom Nutzer im Nachhinein nachvollzogen werden, da während des Aufenthaltes in einem Währungsgebiet grundsätzlich derselbe Umrechnungsfaktor verwendet wird.

Bevorzugt wird das aktuelle Guthaben in der Währung desjenigen Währungsgebietes angezeigt, in dem das Nutzerendgerät benutzt wird. Die Anzeige kann dabei über ein Display des Nutzerendgerätes oder einer sonstigen Vorrichtung erfolgen. Die Anzeige des aktuellen Guthabens hat den Vorteil, daß der Nutzer des Nutzerendgerätes ein verbleibendes Guthaben der Höhe nach einschätzen und selbst prüfen kann, ob sein Guthaben für eine Fahrt, deren Preis er in der zweiten Währung kennt, ausreichen wird oder nicht.

Bei einer Ausführungsform des erfindungsgemäßen Verfahrens kann das dem Nutzerendgerät zugeordnete Guthaben auf dem Nutzerendgerät gespeichert werden. Die Ermittlung des Fahrpreises erfolgt dann bevorzugt durch eine in das Nutzerendgerät integrierte Verarbeitungseinheit.

Alternativ kann das dem Nutzerendgerät zugeordnete Guthaben auch in einem Hintergrundsystem des Verfahrensanbieters gespeichert werden, über das dann bevorzugt auch die Ermittlung des Fahrpreises sowie die anschließende Abrechnung erfolgt.

Das Guthaben wird vorteilhaft in derjenigen Währung gespeichert, in deren Währungsgebiet es aufgeladen wurde. Wird das Guthaben beispielsweise in Deutschland aufgeladen, so wird es in EURO gespeichert, erfolgt die Aufladung hingegen in Dänemark, so wird es in Dänischen Kronen gespeichert.

Auch besteht bevorzugt die Möglichkeit, einem Nutzerendgerät mehrere Guthaben in mehreren Währungen zuzuordnen, wobei bevorzugt dasjenige Guthaben zuerst aufgebraucht wird, das in demjenigen Währungsgebiet aufgeladen worden ist, in dem das Nutzerendgerät gerade benutzt wird. Eine Anzeige des Gesamtguthabens erfolgt dann in derjenigen Währung, in deren Währungsgebiet das Nutzerendgerät benutzt wird. Wird beispielsweise ein erstes EURO-Guthaben in Deutschland und ein zweites Kronen-Guthaben in Dänemark aufgeladen, um bei dem vorgenannten Beispiel zu bleiben, so wird, wenn eine Benutzung des Nutzerendgerätes in Dänemark stattfindet, das EURO-Guthaben anhand des festgelegten Umrechnungsfaktors in Kronen umgerechnet und zu dem Kronen-Guthaben addiert, so daß ein Gesamtguthaben in Kronen angezeigt wird. Wird das Nutzerendgerät hingegen in Deutschland benutzt, so wird das Kronen-Guthaben basierend auf einem mit der ersten Benutzung in Deutschland festgelegten Umrechnungsfaktor in EURO umgerechnet und zu dem EURO-Guthaben addiert, woraufhin beispielsweise auf einem Display des Nutzerendgerätes ein Gesamtguthaben in EURO angezeigt wird. Wird das Nutzerendgerät hingegen in der Türkei benutzt, so werden sowohl das Kronen-Guthaben als auch das EURO-Guthaben anhand der bei einer ersten Benutzung des Nutzerendgerätes in der Türkei festgelegten Umrechnungsfaktoren jeweils in ein Guthaben in Türkischen Lira umgewandelt und dann addiert, so daß entsprechend auch das Gesamtguthaben in Türkischen Lira angezeigt wird. Die Umrechnungskurse kann beispielsweise ein Hintergrundsystem bereitstellen.

Wie bereits zuvor beschrieben wurde, ermöglicht das erfindungsgemäße Verfahren eine währungsübergreifende Nutzung eines einem Nutzerendgerät zugeordneten Guthabens bzw. elektronischen Fahrscheins. Werden dabei die Beförderungsdienstleistungen verschiedener Dienstleistungsanbieter genutzt, so kann es vorkommen, daß ein Guthaben bei einem Dienstleistungsanbieter aufgeladen wird, jedoch die Beförderungsdienstleistung eines anderen Dienstleistungsanbieters in Anspruch genommen wird. In diesem Fall muß bei der Abrechnung der Beförderungsdienstleistung ein entsprechender (finanzieller) Ausgleich zwischen den entsprechenden Dienstleistungsanbietem stattfinden. Dieser Ausgleich ist jedoch nicht Gegenstand der vorliegenden Erfindung, weshalb hierauf nachfolgend nicht näher eingegangen wird.

Es sollte klar sein, daß das erfindungsgemäße Verfahren in jedes bestehende Verfahren zur automatischen Ermittlung eines Fahrpreises für die Benutzung kostenpflichtiger Transportmittel zur Personenbeförderung integriert werden kann, wie beispielsweise in eines der eingangs beschriebenen Verfahren. Dies soll nachfolgend anhand von zwei den Schutzbereich der vorliegenden Erfindung nicht einschränkenden Ausführungsbeispielen des erfindungsgemäßen Verfahrens näher erläutert werden:

Bei einem ersten Ausführungsbeispiel des erfindungsgemäßen Verfahrens ist auf einem Nutzerendgerät ein Guthaben gespeichert, das in Abhängigkeit von einer in einem kostenpflichtigen Transportmittel zurückgelegten Fahrstrecke automatisch reduziert wird. Dazu ist das Nutzerendgerät derart ausgebildet, daß es von innerhalb der Transportmittel angeordneten Sendern ausgesendete Datentelegramme empfangen kann, wobei die Datentelegramme Informationen enthalten, unter deren Berücksichtigung der Fahrpreis ermittelt und dann automatisch von dem auf dem Nutzerendgerät gespeicherten Guthaben abgezogen wird.

Das Guthaben ist auf dem Nutzerendgerät in derjenigen Währung hinterlegt, in deren Währungsgebiet das Guthaben aufgeladen wurde, beispielsweise unter Verwendung einer dafür vorgesehenen Aufladeeinrichtung. Wurde das Guthaben beispielsweise in Deutschland aufgeladen, so ist das Guthaben in EURO gespeichert. Alternativ kann das Guthaben beispielsweise auch als Punktesystem ausgebildet sein, die für einen bestimmten Geldbetrag aufgeladen werden.

Erfindungsgemäß enthalten die von den in den Transportmitteln angeordneten Sendern ausgesendeten Datentelegramme auch Währungsinformationen, die Informationen über die Währung umfassen, in der der Fahrpreis für die Benutzung dieses Transportmittels abgerechnet wird, nachfolgend gültige Währung genannt, so wie aktuelle Umrechnungsfaktoren für die Umrechnung anderer Währungen in die gültige Währung. Bei diesen Umrechnungsfaktoren kann es sich um offizielle Devisenkurse oder um frei vom Verfahrensanbieter gewählte Umrechnungs- und/oder Anrechnungs- und/oder Umtauschkurse handeln.

Wurde ein Guthaben eines Nutzerendgerätes in Deutschland aufgeladen, und betritt ein Nutzer mit diesem Nutzerendgerät ein deutsches Transportmittel, so empfängt das Nutzerendgerät zusammen mit den von den Sendern ausgesendeten Datentelegrammen die Währungsinformationen. Diese Währungsinformationen werden in dem Nutzerendgerät weiterverarbeitet, woraufhin festgestellt wird, daß die für das Transportmittel gültige Währung derjenigen Währung entspricht, in der das Guthaben auf dem Nutzerendgerät hinterlegt ist. Eine Ermittlung des Fahrpreises sowie die daraus resultierende Reduzierung des auf dem Nutzerendgerät gespeicherten Guthabens können demnach erfolgen, ohne daß eine Währungsumrechnung erfolgen muß.

Betritt nun ein Nutzer mit dem gleichen Nutzerendgerät beispielsweise ein dänisches Transportmittel, so stellt das Nutzerendgerät anhand der übermittelten Währungsinformationen fest, daß die Währung des auf ihm gespeicherten Guthabens nicht mit derjenigen Währung übereinstimmt, in der eine Beförderung in dem vorliegenden Transportmittel abgerechnet wird. Daraufhin wird das gespeicherte Guthaben mit dem entsprechenden Umrechnungsfaktor von EURO in Dänische Kronen umgerechnet und auf einem Display des Nutzerengerätes angezeigt, woraufhin eine Reduzierung des Guthabens in Abhängigkeit von der im Transportmittel zurückgelegten Wegstrecke in Dänischen Kronen erfolgt.

Der bei einer erstmaligen Benutzung eines Transportmittels in einem Währungsgebiet, das nicht demjenigen Währungsgebiet entspricht, in dem das Guthaben aufgeladen wurde, übersendete Umrechnungsfaktor wird im Nutzerendgerät gespeichert und solange verwendet, bis das Nutzerendgerät wieder in einem anderen Währungsgebiet benutzt wird, also während des gesamten Aufenthalts des Nutzers in dem entsprechenden Währungsgebiet. Auf diese Weise wird sichergestellt, daß das auf dem Display des Nutzerendgerätes angezeigte Guthaben während des gesamten Aufenthalts des Nutzers in einem Währungsgebiet konstant bleibt und von einer Änderung des Wechselkurses nicht beeinträchtigt wird. Das hat den Vorteil, daß der Nutzer ein verbleibendes Guthaben der Höhe nach einschätzen und selbst prüfen kann, ob dieses für eine Fahrt, deren Preis er kennt, ausreichen wird oder nicht. Ferner kann der Nutzer die Abrechnung der in Anspruch genommenen Beförderungen nachvollziehen, da diese auf einem einheitlichen Umrechnungsfaktor beruhen.

An dieser Stelle sei darauf hingewiesen, daß zwar die Abrechnung der Fahrpreise in der fremden Währung erfolgt, die Währung des gespeicherten Guthabens hingegen konstant bleibt. Der Fahrpreis wird also mittels des Umrechnungsfaktors in die Währung des gespeicherten Guthabens konvertiert und daraufhin erst von dem gespeicherten Guthaben abgezogen. Kehrt der Nutzer also in dasjenige Währungsgebiet zurück, in dem sein Guthaben aufgeladen wurde, so braucht die Währung des gespeicherten Guthabens nicht umgerechnet zu werden. Vielmehr wird bei der nächsten Benutzung eines Transportmittels der Umrechnungsfaktor auf die Zahl "1" korrigiert, da die Währung, in der Beförderungen abgerechnet werden, wieder mit der Währung des gespeicherten Guthabens übereinstimmt. Da die Währung des gespeicherten Guthabens konstant bleibt, können bei der Rückkehr in das ursprüngliche Währungsgebiet keine Guthabenverluste aufgrund ungünstiger Wechselkurse entstehen.

Ferner können bei der ersten Ausführungsform des erfindungsgemäßen Verfahrens Guthaben in verschiedenen Währungen auf dem Nutzerendgerät gespeichert werden. So können beispielsweise ein EURO-Guthaben in Deutschland und ein Guthaben in Dänischen Kronen in Dänemark auf das Nutzerendgerät geladen werden. Je nachdem, wo das Nutzerendgerät dann genutzt wird, erfolgt eine Umrechnung eines oder beider Guthaben unter Verwendung des bzw. der entsprechenden Umrechnungsfaktoren in die in dem jeweiligen Währungsgebiet gültige Währung, die dann auf dem Display des Nutzerendgerätes angezeigt wird.

Bei einer weiteren Ausführungsform des erfindungsgemäßen Verfahrens ist einem Nutzerendgerät über eine Nutzerendgerätkennung ein Guthaben auf einem Konto zugeordnet, das beim Verfahrensanbieter eingerichtet ist. Zur Nutzung eines Transportmittels muß ein Nutzer mit seinem Nutzerendgerät an einer Check-In-Einrichtung einen Eincheckvorgang vornehmen, wobei das Nutzerendgerät seine ihm eindeutig zugeordnete Nutzerendgerätkennung an die Check-In-Einrichtung übermittelt. Durch diesen Check-In-Vorgang wird ein Hintergrundsystem darüber informiert, daß nunmehr eine Benutzung eines Transportmittels unter Verwendung des anhand der Nutzerendgerätkennung identifizierten Nutzerendgerätes stattfindet. Sobald der Nutzer dann das Transportmittel wieder verläßt, checkt er sich an einer entsprechenden Check-Out-Einrichtung mit seinem Nutzerendgerät wieder aus, wobei wiederum die Nutzerendgerätkennung vom Nutzerendgerät an die Check-Out-Einrichtung übertragen wird. Anhand der Orte, an denen der Check-In- und der Check-Out-Vorgang durchgeführt wurden, kann die Fahrstrecke ermittelt werden, die vom Nutzer bzw. vom Nutzerendgerät zurückgelegt wurde, woraufhin der Fahrpreis ermittelt und von dem auf dem dem Nutzerendgerät zugeordneten Konto hinterlegten Guthaben abgezogen werden kann.

Erfindungsgemäß wird mit dem Check-In-Vorgang überprüft, ob diejenige Währung, in der die Benutzung des entsprechenden Transportmittels abgerechnet wird, derjenigen Währung entspricht, in der das Guthaben auf dem dem Nutzerendgerät zugeordneten Konto gespeichert ist. Ist dies der Fall, so muß keine Währungsumrechnung erfolgen. Alternativ kann der Umrechnungsfaktor auch gleich "1" gesetzt werden. Sind die Währungen hingegen verschieden, so wird wie bei der ersten Ausführungsform ein Umrechnungsfaktor festgelegt, der solange Gültigkeit aufweist, solange sich der Nutzer in dem entsprechenden Währungsgebiet befindet.

Für währungsübergreifende Fahrten können besondere Regelungen getroffen werden. Beispielsweise können währungsübergreifende Fahrten als zwei Teilfahrten angesehen werden, worauf hier jedoch nicht näher eingegangen werden soll.

Es sollte klar sein, daß die zuvor beschriebenen Ausführungsformen nicht einschränkend sind. Vielmehr sind Modifikationen und Änderungen möglich, ohne den Schutzbereich der vorliegenden Erfindung zu verlassen, der durch die beiliegenden Ansprüche definiert ist.

## Patentansprüche

1. Verfahren zur automatischen Ermittlung eines Fahrpreises für die Benutzung kostenpflichtiger Transportmittel zur Personenbeförderung, bei dem
- einem Nutzerendgerät ein Guthaben in einer in einem ersten Währungsgebiet gültigen Währung zugeordnet wird, das bei einer Benutzung eines Transportmittels zur automatischen Abrechnung des Fahrpreises dient,
- automatisch ein Umrechnungsfaktor zum Umrechnen der ersten Währung in eine in einem zweiten Währungsgebiet gültigen zweite Währung festgelegt wird, sobald das Nutzerendgerät in einem zweiten Währungsgebiet benutzt wird, und
- Fahrpreise automatisch in der zweiten Währung ermittelt, unter Verwendung des festgelegten Umrechnungsfaktors in die erste Währung umgerechnet und dem Guthaben in der ersten Währung abgezogen werden, solange das Nutzerendgerät nicht in einem anderen Währungsgebiet benutzt wird.

2. Verfahren nach Anspruch 1, bei dem der Umrechnungsfaktor für eine vorbestimmte Zeitdauer und/oder bis zum Eintreten eines vorbestimmten Ereignisses konstant bleibt.

3. Verfahren nach Anspruch 1 oder 2, bei dem eine Anzeige des Guthabens in der Währung desjenigen Währungsgebiets erfolgt, in dem das Nutzerendgerät benutzt wird.

4. Verfahren nach einem der Ansprüche 1 bis 3, bei dem das Guthaben auf dem Nutzerendgerät gespeichert wird.

5. Verfahren nach Anspruch 4, bei dem die Ermittlung des Fahrpreises durch eine in das Nutzerendgerät integrierte Verarbeitungseinheit erfolgt.

6. Verfahren nach einem der Ansprüche 1 bis 3, bei dem das Guthaben in einem Hintergrundsystem gespeichert wird.

7. Verfahren nach Anspruch 6, bei dem die Ermittlung des Fahrpreises durch das Hintergrundsystem erfolgt.

8. Verfahren nach einem der vorhergehenden Ansprüche, bei dem das Guthaben in derjenigen Währung gespeichert wird, in deren Währungsgebiet es aufgeladen wurde.

9. Verfahren nach einem der vorhergehenden Ansprüche, bei dem einem Nutzerendgerät mehrere Guthaben in mehreren verschiedenen Währungen zugeordnet werden können.

10. Verfahren nach Anspruch 9, bei dem Guthaben, die in demjenigen Währungsgebiet aufgeladen worden sind, in dem das Nutzerendgerät gerade benutzt wird, bevorzugt aufgebraucht werden.

11. Verfahren nach Anspruch 9 oder 10, bei dem eine Anzeige des Gesamtguthabens in derjenigen Währung erfolgt, in deren Währungsgebiet das Nutzerendgerät gerade benutzt wird.
